# EUROPEAN PATENT SPECIFICATION

(11) **EP 3 878 549 B1**
(45) Date of publication and mention of the grant of the patent: **09.08.2023**
(21) Application number: 18916179.7
(22) Date of filing: 09.11.2018
(51) Int. Cl.: B01J 19/10, B05B 17/06

(54) **CAPILLARY REACTOR WITH ULTRASOUND**
KAPILLARREAKTOR MIT ULTRASCHALL
RÉACTEUR CAPILLAIRE À ULTRASONS

(30) Priority: 27.04.2018 ES 201830422 U
(43) Date of publication of application: 15.09.2021
(73) Proprietor: Gómez Torregrosa, Roberto, 03202 Eiche (Alicante) (ES); Navarro Brull, Francisco José, 03560 El Campello Alicante (ES)
(72) Inventor: GÓMEZ TORREGROSA, Roberto, 03690 San Vicente del Raspeig (ES); NAVARRO BRULL, Francisco José, 03560 El Campello (Alicante) (ES)
(74) Representative: Temiño Ceniceros, Ignacio
(86) International application number: PCT/ES2018/070727
(87) International publication number: WO 2019/207178

(56) References cited:
- WO-A1-01/17672
- WO-A1-2015/176134
- US-A1- 2004 065 599
- US-A1- 2016 347 774
- FREITAS S et al.: "Continuous contact- and contamination-free ultrasonic emulsification-a useful tool for pharmaceutical development and production", ULTRASONICS: SONOCHEMISTRY, vol. 13, no. 1 1 January 2006 (2006-01-01), pages 76-85, XP005109557, GB ISSN: 1350-4177, DOI: 10.1016/j.ultsonch. 2004.10.00 4 [retrieved on 2019-07-03]
- AL-BUDAIRI et al.: "A design approach for longitudinal-torsional ultrasonic transducers", Sensors and Actuators A: Physical, vol. 198 15 August 2013 (2013-08-15), pages 99-106, XP055646853, DOI: https://doi.org/10.1016/j.sna. 2013.04.02 .4 Retrieved from the Internet: URL:https://www.sciencedirect.com/science/ article/pii/S092442471300188X [retrieved on 2019-03-07]
- LARREA ANE et al.: "Efficient production of hybrid bio-nanomaterials by continuous microchannel emulsification: Dye-doped Si02and Au-PLGA nanoparticles", CHEMICAL ENGINEERING JOURNAL, vol. 316 3 February 2017 (2017-02-03), pages 663-672, XP029940595, AMSTERDAM, NL ISSN: 1385-8947, DOI: 10.1016/j.cej. 2017.02.00 3 [retrieved on 2019-03-07]

## Description

### FIELD OF THE INVENTION

The capillary reactor with ultrasound of the present invention is a device consisting of a capillary tube located in a helical-shaped probe that homogenises the acoustic field generated along the capillary tube without the occurrence of longitudinal nodes/antinodes, such that a capillary reactor is successfully sonicated in a homogeneous manner and controlling the temperature thereof.

The field of application of the present invention is the industrial sector related to reactors primarily applied in pharmaceutical chemistry or medicinal chemistry, and in sonochemistry, such that the invention is intended for enabling continuous work in chemical or physical (crystallisation) processes, permitting the handling of solids and/or the improvement of heterogeneous (gas-liquid-solid) mixtures in capillary tubes of variable diameter and length, with optimal temperature control.

### PRIOR STATE OF THE ART

The size miniaturisation of conventional chemical reactors offers the fine chemistry industry better control over the reaction and higher efficiency, which permits advancing towards continuous instead of batch production. When the diameter of the reactor is reduced to the order of millimetres, high surface/volume ratios of the reactor permit the control of complex and/or highly exothermic chemical reactions. However, the presence of solids limits the service life of these miniaturised reaction systems, also referred to as capillary reactors, milli- or micro-reactors. Solid particles of the catalyst, solid reagents or reaction byproducts complicate the handling of a reactor with these dimensions and operating conditions. The formation of particle aggregates may cause the clogging of the capillary reactor both on a laboratory scale and in industrial synthesis, limiting the implementation of these systems.

Sonication is known as the act of applying sound energy for agitating the particles of a specific element and, according to the present invention, the application of an acoustic field may help to disperse and break up the particles. The vibration of the reaction surfaces is obtained by direct transmission with equipment provided with piezoelectric transducers connected to probes of different geometries and/or materials, for example, an ultrasound probe, as well as by indirect transmission by means of ultrasonic baths. The acoustic field in high-power ultrasound devices may therefore generate cavitation both in the reaction medium and in the liquid used for transmission. Up until now, on an industrial scale, high-power ultrasound has been used for different applications, which ranges from cleaning to emulsification or homogenisation, among others *[*Power Ultrasonics book, 2015]*.* The control of the acoustic field and its benefits is a function of the amplitude and length of the wave generated by the transducer, the geometry of the sonicated medium and the standing wave generated therein.

Langevin-type pre-stressed high-power ultrasound transducers are commonly used in industry due to their high efficiency, specific design of frequencies with a narrow band, or also as an active part of ultrasonic baths and probes. Their most fundamental design is based on one or more pre-stressed piezoelectric discs by means of metallic parts and a central screw. Langevin transducers act as resonating structures which vibrate in the axial or longitudinal direction thereof and respect the physical lengths (wavelengths) imposed by the speed of sound of the materials used, as well as the working resonant frequency thereof. Sonotrodes or ultrasonic horns couple probes for amplifying and directing acoustic energy to areas of interest. The most common configuration of a sonotrode is that of a Langevin transducer as an active part and a titanium probe or rod in its front part which reduces its cross-sectional area so as to increase the longitudinal vibration amplitude.

The incorporation of helical or diagonal grooves around the front part of the transducer (coupling) partially transforms longitudinal movement into torsional movement. This application can be found in ultrasound probes and surgical devices since it adds rotational movement in cutting tools. US2016347774 A1 discloses a capillary tubular flow reactor with a megasonic separator containing a transducer plate which applies high frequency ultrasound to create a standing wave within a separation chamber of a megasonic separator. The megasonic separator is used for sonication such that ultrasonic and/or megasonic operation also has the ability to achieve specificity of separation based on particle size by tuning of the operation parameters such as frequency and energy density. US 2004/065599 A1 relates to a method and apparatus for separating by size a mixture of different size particles using ultrasound. A mixture of different size particles are first focused at nodes of a standing pressure wave in a vessel, for example a glass capillary, and then separated by an inertial nonlinear force generated by transverse vibrations in the vessel.

The conventional ultrasound devices mentioned present a series of drawbacks. The response of ultrasound probes shows periodic nodes and antinodes at a set distance (wavelength), which means that the system does not vibrate homogeneously at all points. The behaviour of these standing waves may be partially modified with the suitable selection of material (speed of sound), the shape of the probe and the working frequency. In any case, the acoustic radiation forces transmitted to the sonicated medium are limited due to this lack of displacement homogeneity. Furthermore, high-power ultrasound applications, usually in the range of 20 kHz, have longer wavelengths and standing waves generate an even less homogeneous acoustic field. Likewise, commercial ultrasonic baths used in capillary reactors will always show significantly uneven distributions due to antinodes of the sound pressure field in the liquid medium.

The present invention has arisen because there are no practical solutions which successfully sonicate a capillary reactor in a homogeneous manner and controlling the temperature. Only the use of several transducers along the area of interest or the indirect transmission by means of a liquid *[Hielscher GDmini2-Ultrasonic Inline Micro-Reactor]* can be considered as partial solutions. The inevitable local increase in temperature of the transmission medium due to losses of mechanical friction at the connection points of several transducers along the reactor renders them useless in fine chemistry. Moreover, the efficiency and scalability of ultrasonic baths is limited by the losses of acoustic energy due to the difference in impedances between the liquid used for transmission and the material of the capillary, the non-homogeneity of the acoustic field and cavitation phenomena in the non-desired area or area external to the medium.

It should also be mentioned that the disclosure made in the document entitled *"Continuous contact- and contamination-free ultrasonic emulsification.* A useful tool for pharmaceutical development and production" by Freitas *et al.,* is also known, which describes an apparatus comprising a power ultrasound transducer intended for obtaining nanodroplets of an aqueous emulsion, having a configuration different from that of the present invention by making use of a tube equipped with a jacket and which, among other aspects, has the drawback of not taking measures to prevent the effect of the nodes of the sound waves generated when sonication is performed by means of an aqueous medium.

In this sense, the disclosure made in the document entitled "A design Approach for longitudinal-torsional ultrasonic transducers" by Al Budairi *et al.*, is also known, which describes a geometry of a solid sonotrode with helical surface machining which seeks to improve the generated field; or the disclosure made in the document entitled "Efficient production of hybrid bionanomaterials by continuous microchannel emulsification: Dye-doped SiO2and Au-PLGA nanoparticles" by Larrea *et al*., is also known, which compares a micromixing system with ultrasonic emulsification with a horn coupled to a transducer and a spiral capillary tube a posteriori, and where there is no machining in the body of the sonotrode for improving the acoustic field. However, none of these documents presents or suggests any solution whatsoever to the drawback of controlling the reduction of nodes and antinodes. They comprise rigid structures which do not permit versatility or the superimposing of capillary tubes on a probe, nor do they permit taking measures to prevent the effect of the nodes of the sound waves generated.

Accordingly, there is still a need to develop an acoustic capillary reactor which vibrates in a homogeneous and efficient manner, which is readily scalable for long reaction lengths, which permits precisely controlling the temperature as the average separation between the transducer and the probe increases, and which is able to eliminate the nodes and antinodes which the sonication process causes in a mixture while it is being prepared in a capillary tube.

### DESCRIPTION OF THE INVENTION

The device consists of a capillary tube located in a helical-shaped probe that homogenises the acoustic field generated along the capillary tube without the occurrence of longitudinal nodes/antinodes.

The helical probe is fundamentally comprised of a straight cylinder, also known as a neck, connected to one or more helices, also known as lips, at a constant or variable distance or angle.

The complete sonotrode is formed by a series of piezoelectric transducers that are stacked and connected to the probe made of solid material which, with its helical-shaped machining, acts live a waveguide, generating longitudinal, radial and torsional vibrations in the capillary tube in a homogeneous manner. The frequencies of the alternating current which excite the piezoelectric actuators corresponds to those normally used in power ultrasound (□20-500 kHz) and can be adjusted to work at the resonance frequencies of the assembly, thus maximising the energy efficiency thereof and allowing for different (longitudinal, radial and torsional) vibration modes or operating modes (continuous, modular or pulse sonication).

The external surface of the helix can be used for accommodating the reaction tube, which efficiently receives acoustic energy in the longitudinal, radial and/or torsional directions.

The cylindrical-, helical-shaped probe acts like a waveguide and distributes the acoustic field in a pseudo-homogeneous manner. Hereinafter, this design permits more complex configurations; increasing the number of transducers, the number of probes, or adding secondary shapes to the probe by means of the crimping or bending thereof, or other possibilities.

The inner part or free surface of the helical probe can be used for controlling temperature or for housing an additional reaction tube. This arrangement confers a series of advantages to the invention:
- The homogeneous distribution of the acoustic field eliminates the limitation imposed by longitudinal standing waves, even at low ultrasound frequencies (~20-40 kHz).
- The direct solid-solid-fluid transmission of the acoustic power to the liquid contained in the capillary tube permits the use of different diameters and lengths. The vibration is transmitted by the solid, generally metallic material of the probe, which reduces losses due to attenuation and enables efficient sonication in probes having a long length, on the order of metres, with an extensive working surface.
- The design efficiency permits operating both at a low power, obtaining only mechanical benefits such as the elimination of clogging due to vibration without complications derived from the increase in temperature, or at high ultrasound, cavitation and sonochemistry powers. Thus, the acoustic energy can be used to favour different physicochemical processes such as mixing in media having one or more phases with or without cavitation and/or for reducing limitations of the handling of solids in suspension, mitigating or eliminating possible clogging.
- The isolation of the sonotrode from the reaction medium prevents contamination by metals due to erosion caused by cavitation when using, for example, a capillary tube made of glass, such as borosilicate; metallic materials such as stainless steel or copper; or inert polymer materials such as polytetrafluoroethylene (PTFE), perfluoroethylene/propylene (FEP), perfluoroalkoxyalkanes (PFA), perfluoroalkoxyalkanes (MFA), polyvinyl fluoride (PVF) or polyether ether ketone (PEEK).
- The high surface/volume ratios of the capillary permit optimal temperature control of the reactor using forced ventilation or a secondary thermal tube in contact with the probe.
- The separating distance between the piezoelectric transducer and the sonicated medium minimises heat transfer, and the power received can furthermore be amplified by means of changes in cross-section of the probe.
- The design of the probe furthermore allows for an additional transducer at the free end of the probe for excitation at secondary frequencies or energy recovery.
- The helical arrangement of the probe can be longitudinal, bent, crimped or adapted to different shapes to reduce the space occupied by the reactor. One and the same transducer can emit to a plurality of helical-shaped probes.
- The excitation of the piezoelectric elements at different resonating frequencies permits the reactor to operate with borderline cases of helical design complying with several acoustic-mechanical requirements. The use of several longitudinal vibration modes allows from a diameter of the central shaft (cylinder or neck) reduced to a minimum, forming a helix, to a diameter of the shaft equal to the diameter of the external helix, forming a cylinder.
- The ends of the probe can be used for housing fittings, T-joints and/or mixing devices. It is possible to use threaded connection or anchoring systems such that the benefits provided by sonication are also propagated to said devices.
- Capillary or reduced size tubes in turn permit housing inner concentric tubes for carrying out tube-in-tube reactions.
- The capillary tubes can be located on the outer working surface of the helix of the probe or can be housed, protected or embedded therein.

### BRIEF DESCRIPTION OF THE FIGURES

Figure 1 shows a perspective view of the invention, with the sonotrode with helical probe and waveguide that homogenises the acoustic field transforming longitudinal vibrations into radial and torsional vibrations.
Figure 2 shows a perspective view of a sonotrode with a capillary accommodated in a simplified machining of the probe along with the representation of longitudinal and radial vibration modes.
Figure 3 shows a detail and side view with an example of the application of the helical probe with a capillary tube.
Figure 4 shows a detail of the helical probe and design parameters divided by their fundamental elements.
Figure 5 shows a detail of the longitudinal (L), radial (R) and torsional (T) vibration modes in the sonotrode that homogenise the acoustic field along the capillary
Figure 6 shows a component-free perspective view of an embodiment of an ultrasonic capillary reactor.
Figure 7 shows a component-free perspective view of an embodiment of an ultrasonic capillary reactor where it can be observed that the probe is bent and crimped.
Figure 8 shows a component-free perspective view of an embodiment of an ultrasonic capillary reactor with a second ultrasound transducer at the final end of the probe.

### DETAILED DESCRIPTION OF THE EMBODIMENTS

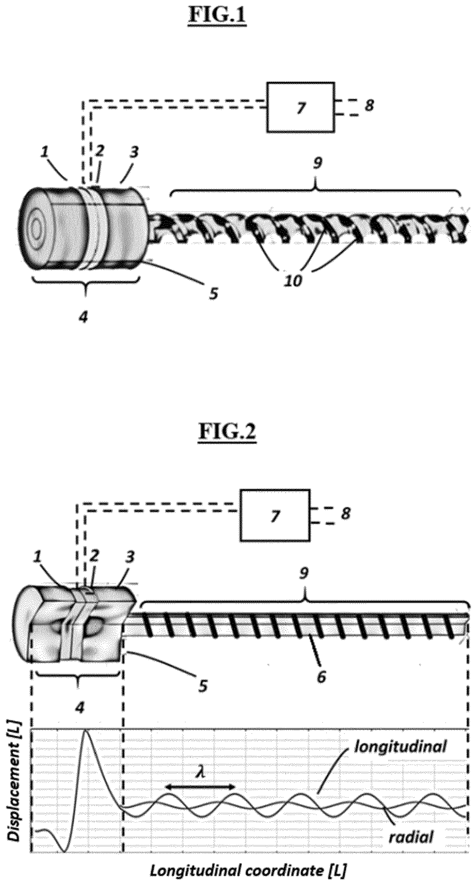

Figures 1 and 2 show a preferred embodiment of the capillary reactor with ultrasound, fundamentally comprising a power ultrasound transducer (4), also known as an ultrasound horn, formed by a plurality (preferably 1 or 2 pairs) of piezoelectric elements in the form of a ring (2) which are secured by a compression screw and nut to a rear part (1) and front part (3) which vibrate in resonance, respecting the half wavelength of the set and transforming the electrical energy (8) by means of a control system (7) which modifies the frequency and amplitude of the signal. The probe (9), typically made of a titanium alloy or fatigue-resistant material, has helical elements which increase the homogeneity of the acoustic field, as can be seen in the nodes and antinodes marked as clear and dark areas (10), respectively. Figure 2 shows one of the borderline cases of helical design of the probe, which achieves a cylindrical-helical geometry (6) next to a right-angle mechanical coupling (5).

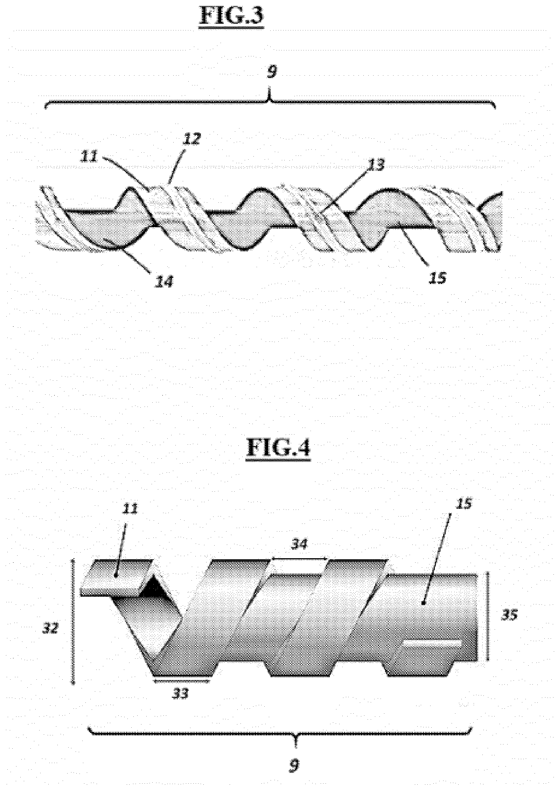

Figure 3 shows a detailed example of a helical probe (9) with a capillary reaction tube (12), where a twisted geometry produced by a helix-type surface (11) is developed supported on a cylindrical shaft (15). This shape provides homogeneity of the acoustic field and grants flexibility to the probe. The capillary tube (12) is firmly longitudinally accommodated in a cavity machined in the working surface of the helix (11), accommodated being understood as the possibility of being connected, supported, adhered, embedded or protected.

The design of the helical probe (9) has the fundamental elements shown in detail in Figure 4, where the cylindrical shaft (15) and the helix (11) are shown separately. The features such as external diameter (32) and internal diameter (35), number, pitch (34) and shape (33) of the helix-type elements (11) can be designed to be adjusted to different acoustic operating modes (single frequency or multifrequency), as well as for the improvement of acoustic-mechanical properties.

Going back to Figure 2, said figure refers to the borderline case of helical design of the probe (9), when the latter has a cylindrical-helical configuration (6) next to a right-angle mechanical coupling (5). The other extreme case would correspond to a probe in the form of a helix. In both cases, the vibrations transmitted to a capillary tube are primarily longitudinal due to the homogeneous cross-section and geometry of the probe. The graph shown in Figure 2 illustrates how the external diameter of the probe should be about one fourth of the wavelength that is characteristic of the material so as to reduce the complexity of the acoustic field generated by the transducer (4). The wavelength in turn depends on the propagation speed of the applied vibration and frequency. This longitudinal nodal distribution generates a pattern of well-defined maximum and minimum pressures which, for example, displaces particles in a manner similar to peristaltic pumping. By means of variations in the frequency and/or timing-duration of the signal applied to the transducer (4), the acoustic field may be redistributed and the blocking or obstruction of the capillary thus prevented.

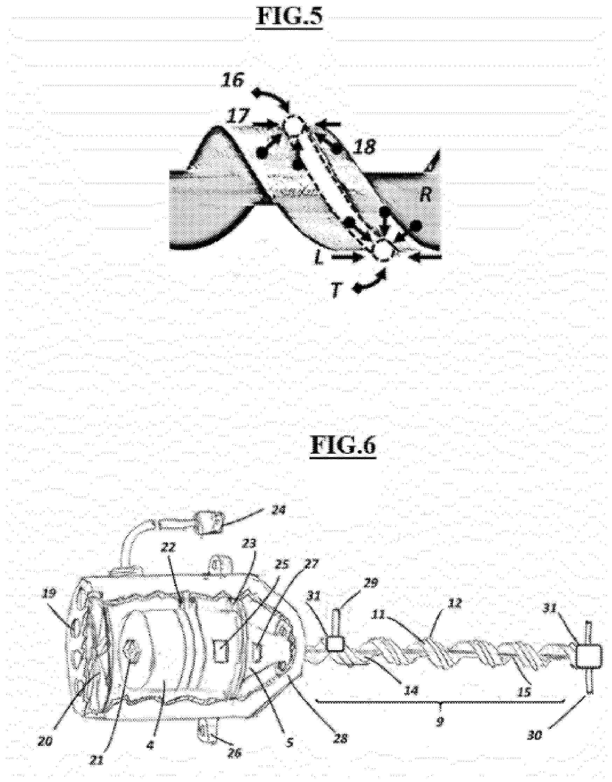

As can best be seen in Figure 5, the capillary tube (12) is longitudinally accommodated in the helical probe through a cavity machined in the surface which transmits the vibrations with different vibration modes: torsional vibration mode (16 - T), longitudinal vibration mode (17 - L) and radial vibration mode (18 - R), that successfully homogenise the acoustic field received by the capillary. Ultrasound transmission may be favoured by means of using welds, resins or adhesives which reduce the change in acoustic impedance and/or provide rigidity to the connection.

As mentioned above, the use of the helical elements shown in Figures 1, 3, and 5 produces a more homogeneous distribution of the acoustic field, eliminating the limitation imposed by longitudinal standing waves by working at low, non-variable ultrasound frequencies (~20-40 kHz). Higher working frequencies will reduce the wavelength, also homogenising the acoustic field, but presenting problems with energy efficiency due to the high attenuation that is experienced.

By way of example, a suitable hardened steel probe with helical notches (14) with a depth of 5 mm, a constant angle of 45° and a pitch of 20 mm in a cylinder with an external diameter of 12 mm, as depicted in Figure 3, has been discovered in the context of the present invention. This probe coupled to a transducer provides a homogeneous vibration to a capillary reactor of at least 500 mm in length and 1.6 mm in external diameter when sonicated at about 28 kHz.

The direct solid-solid-fluid transmission of the acoustic power to the liquid contained in the capillary tube (12) in Figure 3 in turn permits the use of different diameters and lengths. The vibration is transmitted by a solid material with low attenuation, enabling efficient sonication and an extensive working surface of the helix (11) housing one or several capillary tubes in the outer or inner part of the probe (not shown). The efficiency and high homogeneity achieved by the present invention permits working in at least two operating modes:
- low energy power where the amplitude of the vibrations transmitted to the tube is enough to reduce the risk of clogging (13) or obstructing, but not to induce significant changes in temperature or chemical effects;
- high ultrasound powers where the amplitude of the vibrations and corresponding sound pressure values are high, generating cavitation. Thus, the acoustic energy can be used to favour different physicochemical processes such as those related to sonochemistry or mixing in media having one or more substances if one of the phases in solution is compressible.

For temperature control, the inner part (14) of the helical probe can be used by means of a secondary tube and a thermal paste which improves the discharge or input of thermal energy but not the transmission of mechanical vibrations. Additionally, an external thermal conduction system for cooling or heating or a forced air system can also be implemented.

Taking into account the preceding figures, as can be seen in greater detail in Figure 6, a chemical capillary tube reactor (12) is suitable for use with the present invention. Its features can be designed for the specific application or correspond to commercially available capillaries. The capillary reaction tube (12) receives the vibrations generated by a Langevin-type transducer (4) by means of a helical-shaped machined probe (9) for homogenising the acoustic field distribution throughout the reaction medium. A mechanical coupling (5) reduces the cross-section of the probe, thus amplifying the signal. The power and signal are supplied to the transducer by means of terminals (22) welded or attached to electrical cables (24) connected to a control system with a frequency amplifier and generator (not shown). The assembly of one or more probes for a single transducer is facilitated by clamping areas (25, 27) or compression screws (21), being accommodated in an external casing (28) making use of the nodal points (23), furthermore containing outer anchoring systems (26) and cooling equipment (20) with ventilation gratings (19) for cooling the piezoelectric equipment.

There can also be seen in Figure 6 a forced ventilation cooling system (20) which, combined with the separating distance provided by the front part of the transducer (4) and the mechanical coupling (5), minimises the heat transfer received by conduction. The mechanical coupling (5) can be a right-angle, frustoconical, negative exponential coupling or one of any other shape.

The present invention furthermore permits the use of an inert capillary reaction tube made of borosilicate or a polymer such as polytetrafluoroethylene (PTFE), which prevents contamination by metals generated by cavitation in conventional ultrasound probes. Capillary or reduced size tubes in turn permit housing concentric tubes for carrying out tube-in-tube reactions (not shown) with different insertion points.

To prevent blockage of the capillary, as can be observed in Figure 6, certain areas of interest, such as the ends of the probe (9), can be used for housing fittings, T-joints and/or mixing devices which maximise the acoustic energy received by means of the placement thereof in antinodes (29, 30 and 31), which furthermore permits maximising the amplitude by reducing the section of the probe at these points. The length of the helical probe is variable, the direction of flow may be one-way or oscillating, and connections of the capillary tube may be inlet or outlet connections.

One and the same high-power transducer can emit to a plurality of helical-shaped probes by means of a coupling which increases the vibration area, but keeps the main vibrations divided by areas by means of notches (not shown). The helical arrangement of the probe can be longitudinal, bent, crimped or adapted to different shapes to reduce the space occupied by the sonoreactor (not shown).

The present invention furthermore allows for additional pairs of piezoelectric elements to be excited at secondary frequencies or with different vibration modes (not shown). The control system can be dynamically adjusted by modulating the power as required, such as a drop in maximum reaction pressure or temperature, or physical limitations such as resonance frequencies, overheating or maximum stress in the material. Likewise, the system permits a system for the pause or spacing between individual torsional or longitudinal actuating signals in order to comply with the mentioned purposes or other on line measures proportional to the concentration of reagents, for example, the absorption of infrared, visible or ultraviolet frequencies.

Additionally, the free end of the helical probe may couple another transducer for energy recovery (not shown) or for exciting the probe with complementary vibration modes or frequencies. The use of secondary transducers may be of interest for areas before or after the reactor.

Finally, although certain embodiments of the present invention have been described above, these descriptions are provided by way of illustration and/or explanation. Variations, changes, modifications and deviations with respect to the systems and methods set forth above may be introduced without departing from the scope of the attached claims.

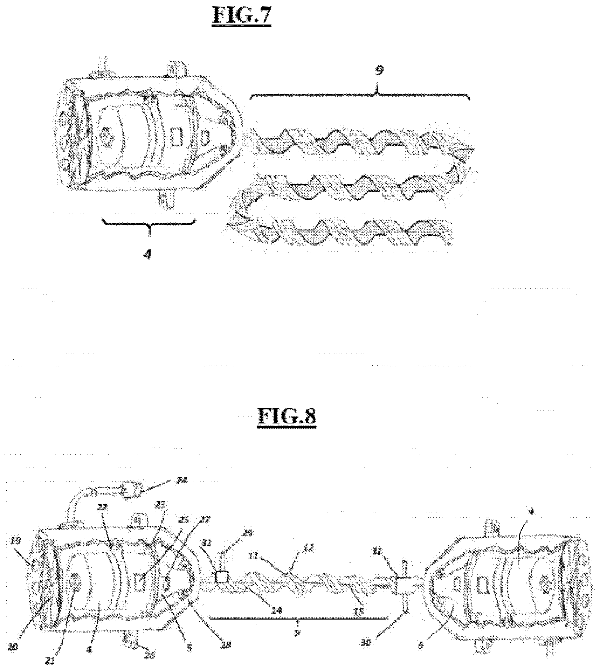

Different alternative embodiments of the invention can be observed in Figures 7 and 8.

By way of example, it can be observed in Figure 7 that the probe with a helical design permits having any secondary shape by means of the bending and crimping thereof, for example, to reduce space. In turn, an embodiment of the invention with a second power ultrasound transducer which can be used for energy recovery, from mechanical to electrical, or for adding secondary vibration modes, can be observed in Figure 8.

## Claims

1. A capillary reactor with ultrasound, which sonicates and homogenises the acoustic field generated along capillary tubes (12) without the occurrence of longitudinal nodes/antinodes, comprising at least one power ultrasound transducer (4) that generates vibrations, the transducer (4) being formed by at least one piezoelectric element (2); and **characterised in that** it comprises:
- at least one machined probe (9) fixed to the transducer (4), made up of at least one helical element with a twisted geometry produced by a helix-type working surface (11) which is developed supported on a cylindrical shaft (15);
- at least one capillary tube (12) which is accommodated in the surface of the helical element of the probe (9);
wherein the helix surface (11) is configured to transmit torsional vibrations (16 - T), longitudinal vibrations (17 - L) and radial vibrations (18 - R) to each capillary tube (12); being each capillary tube (12) longitudinally accommodated in a cavity machined in the working surface of the helix (11);
and wherein the piezoelectric elements (2) are configured to vibrate in resonance respecting the half wavelength of the set, said piezoelectric elements (2) being in connection with a control system (7) configured to transform the electrical energy (8), modify the frequency and amplify the signal.

2. The capillary reactor with ultrasound according to claim 1, **characterised in that** the power and signal are supplied to the transducer (4) by means of terminals (22) welded or attached to an electric cable (24) connected to the control system (7) with frequency amplifier and generator.

3. The capillary reactor with ultrasound according to claim 1, **characterised in that** the assembly of each probe (9) with the transducer (4) is performed by means of clamping areas (25, 27) or compression screws (21) accommodated in an external casing (28) and making use of nodal points (23) and outer anchorings (26).

4. The capillary reactor with ultrasound according to claim 1, **characterised in that** the inner part (14) of the helical probe (9) incorporates a secondary tube and a thermal paste for the discharge or input of thermal energy.

5. The capillary reactor with ultrasound according to any of the preceding claims, **characterised in that** the transducer (4) has cooling equipment (20) with ventilation gratings (19).

6. The capillary reactor with ultrasound according to any of the preceding claims, **characterised in that** at the ends or along the probe (9), there are fittings, T-joints and/or mixing devices (29, 30 and 31) which utilise areas in which the acoustic energy is maximised by means of changes in section or shape.

7. The capillary reactor with ultrasound according to any of the preceding claims, **characterised in that** the direction of flow in the capillary (12) is one-way or oscillating.

8. The capillary reactor with ultrasound according to any of the preceding claims, **characterised in that** each probe (9) has a helical cylindrical configuration (6) to which at least one transducer (4) is fixed at the ends and/or along same by means of mechanical couplings (5).

9. The capillary reactor with ultrasound according to any of the preceding claims, **characterised in that** the capillary tube (12) accommodated in the probe (9) is made of glass.

10. The capillary reactor with ultrasound according to any of claims 1 to 9, **characterised in that** the capillary tube (12) accommodated in the probe (9) is made of an inert polymer.

11. The capillary reactor with ultrasound according to any of claims 1 to 9, **characterised in that** the capillary tube (12) accommodated in the probe (9) is made of steel, copper or metallic material alloy.

12. The capillary reactor with ultrasound according to any of claims 1 to 9, **characterised in that** the capillary tube (12) accommodated in the probe (9) is made of a ceramic material.

13. The capillary reactor with ultrasound according to any of the preceding claims, **characterised by** a capillary tube (12) accommodated in the probe (9) and having a second tube arranged concentrically therein.

## Patentansprüche

1. Kapillarreaktor mit Ultraschall, der das entlang von Kapillarrohren (12) erzeugte akustische Feld beschallt und homogenisiert, ohne dass Längsknoten/- bäuche entstehen, umfassend mindestens einen Hochleistungsultraschallwandler (4), der Schwingungen erzeugt, wobei der Wandler (4) von mindestens einem piezoelektrischen Element (2) gebildet wird; und **dadurch gekennzeichnet, dass** er Folgendes umfasst:
- mindestens eine bearbeitete Sonde (9), die an dem Wandler (4) befestigt ist und aus mindestens einem spiralförmigen Element mit einer verdrehten Geometrie hergestellt ist, die durch eine Arbeitsfläche vom spiralförmigen Typ (11), die auf einem zylindrischen Schaft (15) aufliegt, entsteht;
- mindestens ein Kapillarrohr (12), das in der Oberfläche des spiralförmigen Elements der Sonde (9) untergebracht ist;
wobei die Helixoberfläche (11) so konfiguriert ist, dass sie Torsionsschwingungen (16 - T), Längsschwingungen (17 - L) und radiale Schwingungen (18 - R) auf jedes Kapillarrohr (12) überträgt; wobei jedes Kapillarrohr (12) in Längsrichtung in einem Hohlraum untergebracht ist, der in die Arbeitsfläche der Helix (11) eingearbeitet ist;
und wobei die piezoelektrischen Elemente (2) so konfiguriert sind, dass sie unter Berücksichtigung der halben Wellenlänge des Satzes in Resonanz schwingen, wobei die piezoelektrischen Elemente (2) mit einem Steuersystem (7) in Verbindung stehen, das so konfiguriert ist, dass es die elektrische Energie (8) umwandelt, die Frequenz modifiziert und das Signal verstärkt.

2. Kapillarreaktor mit Ultraschall gemäß Anspruch 1, **dadurch gekennzeichnet, dass** der Strom und das Signal dem Wandler (4) über Klemmen (22) zugeführt werden, die an ein Elektrokabel (24) geschweißt oder an ihm angebracht sind, das mit dem Steuersystem (7) mit Frequenzverstärker und Generator verbunden ist.

3. Kapillarreaktor mit Ultraschall gemäß Anspruch 1, **dadurch gekennzeichnet, dass** die Montage jeder Sonde (9) an dem Wandler (4) mithilfe von Klemmbereichen (25, 27) oder Druckschrauben (21), die in einem Außengehäuse (28) untergebracht sind, und unter Nutzung von Knotenpunkten (23) und Außenverankerungen (26) erfolgt.

4. Kapillarreaktor mit Ultraschall gemäß Anspruch 1, **dadurch gekennzeichnet, dass** der Innenteil (14) der Spiralsonde (9) ein Sekundärrohr und eine Wärmeleitpaste zur Ableitung bzw, Zuführung thermischer Energie enthält.

5. Kapillarreaktor mit Ultraschall gemäß einem der vorhergehenden Ansprüche, **dadurch gekennzeichnet, dass** der Wandler (4) eine Kühleinrichtung (20) mit Lüftungsgittern (19) aufweist.

6. Kapillarreaktor mit Ultraschall gemäß einem der vorhergehenden Ansprüche, **dadurch gekennzeichnet, dass** an den Enden oder entlang der Sonde (9) Anschlüsse, T-Stöße und/oder Mischvorrichtungen (29, 30 und 31) vorhanden sind, die Bereiche nutzen, in denen die akustische Energie durch Querschnitts- oder Formänderungen maximiert wird.

7. Kapillarreaktor mit Ultraschall gemäß einem der vorhergehenden Ansprüche, **dadurch gekennzeichnet, dass** die Strömungsrichtung in der Kapillare (12) gleichbleibend oder oszillierend ist.

8. Kapillarreaktor mit Ultraschall gemäß einem der vorhergehenden Ansprüche, **dadurch gekennzeichnet, dass** jede Sonde (9) eine spiralförmige zylindrische Konfiguration (6) aufweist, an deren Enden und/oder entlang derer mittels mechanischer Kupplungen (5) mindestens ein Wandler (4) befestigt ist.

9. Kapillarreaktor mit Ultraschall gemäß einem der vorhergehenden Ansprüche, **dadurch gekennzeichnet, dass** das in der Sonde (9) untergebrachte Kapillarrohr (12) aus Glas hergestellt ist.

10. Kapillarreaktor mit Ultraschall gemäß einem der Ansprüche 1 bis 9, **dadurch gekennzeichnet, dass** das in der Sonde (9) untergebrachte Kapillarrohr (12) aus einem inerten Polymer hergestellt ist.

11. Kapillarreaktor mit Ultraschall gemäß einem der Ansprüche 1 bis 9, **dadurch gekennzeichnet, dass** das in der Sonde (9) untergebrachte Kapillarrohr (12) aus Stahl, Kupfer oder einer Metallwerkstofflegierung hergestellt ist.

12. Kapillarreaktor mit Ultraschall gemäß einem der Ansprüche 1 bis 9, **dadurch gekennzeichnet, dass** das in der Sonde (9) untergebrachte Kapillarrohr (12) aus einem keramischen Material hergestellt ist.

13. Kapillarreaktor mit Ultraschall gemäß einem der vorhergehenden Ansprüche, **gekennzeichnet durch** ein in der Sonde (9) untergebrachtes Kapillarrohr (12) mit einem konzentrisch darin angeordneten zweiten Rohr.

## Revendications

1. Réacteur capillaire à ultrasons, qui sonique et homogénéise le champ acoustique généré le long de tubes capillaires (12) sans l'apparition de noeuds/ventres longitudinaux, comprenant au moins un transducteur à ultrasons de puissance (4) qui génère des vibrations, le transducteur (4) étant formé par au moins un élément piézoélectrique (2) ; et **caractérisé en ce qu'**il comprend :
- au moins une sonde usinée (9) fixée au transducteur (4), composée d'au moins un élément hélicoïdal à géométrie torsadée produite par une surface de travail (11) de type en hélice qui se développe en appui sur un arbre cylindrique (15) ;
- au moins un tube capillaire (12) qui est logé dans la surface de l'élément hélicoïdal de la sonde (9) ;
dans lequel la surface en hélice (11) est configurée pour transmettre des vibrations de torsion (16-T), des vibrations longitudinales (17-L) et des vibrations radiales (18-R) à chaque tube capillaire (12) ; chaque tube capillaire (12) étant logé longitudinalement dans une cavité usinée dans la surface de travail de l'hélice (11) ;
et dans lequel les éléments piézoélectriques (2) sont configurés pour vibrer en résonance en respectant la demi-longueur d'onde de l'ensemble, lesdits éléments piézoélectriques (2) étant en connexion avec un système de commande (7) configuré pour transformer l'énergie électrique (8), modifier la fréquence et amplifier le signal.

2. Réacteur capillaire à ultrasons selon la revendication 1, **caractérisé en ce que** la puissance et le signal sont fournis au transducteur (4) au moyen de bornes (22) soudées ou attachées à un câble électrique (24) connecté au système de commande (7) à amplificateur et générateur de fréquence.

3. Réacteur capillaire à ultrasons selon la revendication 1, **caractérisé en ce que** l'assemblage de chaque sonde (9) avec le transducteur (4) est réalisé au moyen de zones de serrage (25, 27) ou de vis de compression (21) logées dans un boîtier externe (28) et faisant usage de points nodaux (23) et d'ancrages extérieurs (26).

4. Réacteur capillaire à ultrasons selon la revendication 1, **caractérisé en ce que** la partie intérieure (14) de la sonde hélicoïdale (9) incorpore un tube secondaire et une pâte thermique pour l'évacuation ou l'apport d'énergie thermique.

5. Réacteur capillaire à ultrasons selon l'une quelconque des revendications précédentes, **caractérisé en ce que** le transducteur (4) a un équipement de refroidissement (20) à grilles de ventilation (19).

6. Réacteur capillaire à ultrasons selon l'une quelconque des revendications précédentes, **caractérisé en ce qu'**aux extrémités ou le long de la sonde (9), il y a des raccords, des tés et/ou des dispositifs de mélange (29, 30 et 31) qui utilisent des zones dans lesquelles l'énergie acoustique est maximisée au moyen de changements de section ou de forme.

7. Réacteur capillaire à ultrasons selon l'une quelconque des revendications précédentes, **caractérisé en ce que** le sens de circulation dans le capillaire (12) est unidirectionnel ou oscillant.

8. Réacteur capillaire à ultrasons selon l'une quelconque des revendications précédentes, **caractérisé en ce que** chaque sonde (9) a une configuration cylindrique hélicoïdale (6) à laquelle au moins un transducteur (4) est fixé aux extrémités et/ou le long de celle-ci au moyen d'accouplements mécaniques (5).

9. Réacteur capillaire à ultrasons selon l'une quelconque des revendications précédentes, **caractérisé en ce que** le tube capillaire (12) logé dans la sonde (9) est constitué de verre.

10. Réacteur capillaire à ultrasons selon l'une quelconque des revendications 1 à 9, **caractérisé en ce que** le tube capillaire (12) logé dans la sonde (9) est constitué d'un polymère inerte.

11. Réacteur capillaire à ultrasons selon l'une quelconque des revendications 1 à 9, **caractérisé en ce que** le tube capillaire (12) logé dans la sonde (9) est constitué d'acier, de cuivre ou d'alliage de matériaux métalliques.

12. Réacteur capillaire à ultrasons selon l'une quelconque des revendications 1 à 9, **caractérisé en ce que** le tube capillaire (12) logé dans la sonde (9) est constitué d'un matériau céramique.

13. Réacteur capillaire à ultrasons selon l'une quelconque des revendications précédentes, **caractérisé par** un tube capillaire (12) logé dans la sonde (9) et ayant un second tube disposé concentriquement dans celui-ci.
